Europäisches Patentamt

(19) European Patent Office

Office européen des brevets

(11) Numéro de publication : **0 096 655 B1**

(12) FASCICULE DE BREVET EUROPÉEN

(45) Date de publication du fascicule du brevet : 18.09.85

(21) Numéro de dépôt : 83810220.0

(22) Date de dépôt : 26.05.83

(51) Int. Cl.⁴ : **H 02 G 13/00**

(54) **Installation de paratonnerre.**

(30) Priorité : 03.06.82 CH 3423/82

(43) Date de publication de la demande : 21.12.83 Bulletin 83/51

(45) Mention de la délivrance du brevet : 18.09.85 Bulletin 85/38

(84) Etats contractants désignés :
AT BE CH DE FR GB IT LI LU NL SE

(56) Documents cités :
DE-B- 1 089 440
FR-A- 1 478 526
GB-A- 429 004

(73) Titulaire : **Energie Froide International SA**
**36 avenue Krieg**
**CH-1208 Genève (CH)**

(72) Inventeur : **Invernizzi, Cesare Giulio**
**14bis avenue Dumas**
**CH-1206 Genève (CH)**

(74) Mandataire : **Vuille, Roman et al**
**c/o KIRKER & Cie S.A. 14, rue du Mont-Blanc Case Postale 872**
**CH-1211 Genève 1 (CH)**

Jouve, 18, rue St-Denis, 75001 Paris, France

## Description

On a déjà proposé divers types de paratonnerres auxquels sont associées des sources radioactives facilitant l'arrivée de la foudre de façon préférentielle sur la pointe du paratonnerre.

Il est établi expérimentalement que l'emploi de sources radio-actives placées au voisinage d'une pointe de paratonnerre augmente l'efficacité de la protection, (pour autant que les sources aient un pouvoir ionisant suffisamment intense) c'est-à-dire favorise l'arrivée de la foudre sur cette pointe, grâce à un effet d'ionisation de l'air au voisinage de la pointe du paratonnerre, ionisation qui, en période d'orage, contribue fortement à la création d'un chemin conducteur privilégié entre un nuage chargé électriquement et la pointe du paratonnerre, en sorte que la foudre venant du nuage tombe sur cette pointe et non pas aux alentours.

Il a été proposé (voir par exemple les brevets suivants : US-A-2 025 338 et 2 644 026, IT-A-610 061, AT-A-177 178, GB-A-429 004) d'augmenter l'efficacité des paratonnerres à sources radio-actives, en utilisant le champ électrique atmosphérique pour agir sur les particules émises par ces sources en vue d'augmenter la distance sur laquelle se produit l'ionisation de l'air.

Toutefois, à l'heure actuelle, l'emploi de sources radio-actives sur des paratonnerres se heurte à une opposition croissante de la part des autorités et des usagers, en raison de leur nocivité. Dans la plupart des pays déjà, l'emploi de matières radio-actives dans des installations de paratonnerre, est purement et simplement interdit.

Dans la demande allemande publiée DE-B-1 089 440, il est proposé de produire une ionisation par chocs au voisinage immédiat de la pointe d'un paratonnerre, au moyen d'une source de courant à haute tension provoquant une décharge électrique dans ce voisinage immédiat. Toutefois, l'emploi d'une source à haute tension au voisinage de la pointe de paratonnerre n'est pas sans danger et entraîne une consommation d'énergie non négligeable.

L'auteur de la présente invention s'est proposé de produire une telle ionisation par chocs au voisinage immédiat de la pointe d'un paratonnerre, en utilisant l'électricité atmosphérique elle-même pour produire un ou plusieurs arcs électriques, ce qui évite les inconvénients signalés et apporte l'avantage considérable que, par temps calme, il ne se produit pas d'arc, tandis que par temps d'orage, la formation d'arcs se produit automatiquement avec une intensité d'autant plus grande que des nuages chargés électriquement sont plus proches, ce qui augmente l'ionisation justement lorsque le besoin s'en fait sentir, pour aider à diriger la foudre vers la pointe du paratonnerre.

La présente invention a pour objet une installation de paratonnerre qui est conforme à la revendication 1.

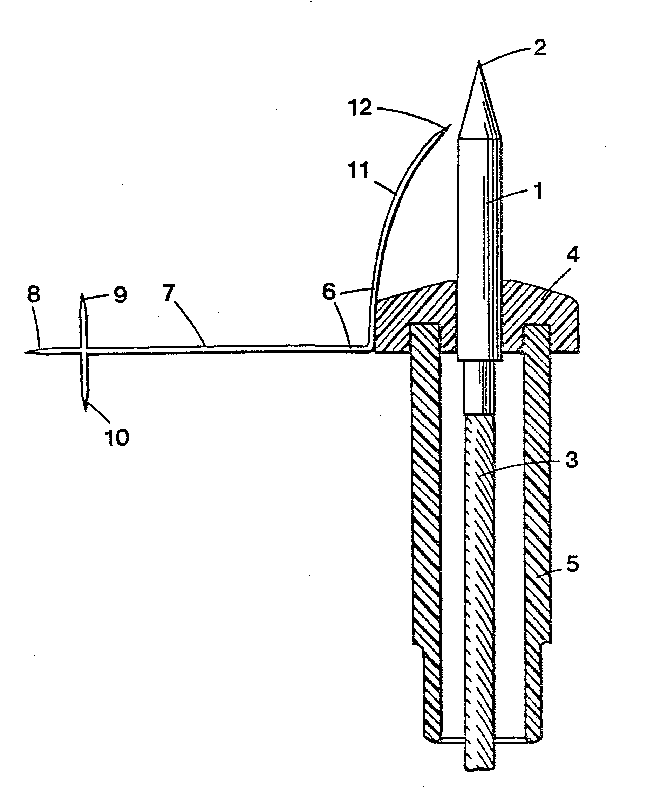

Le dessin annexé représente, à titre d'exemple, une forme d'exécution de l'installation selon l'invention. La figure unique est une vue en coupe de la partie supérieure de cette forme d'exécution.

On voit en 1 la tige du paratonnerre, dont la pointe 2 est destinée à recevoir la foudre. Cette tige est solidaire de l'extrémité supérieure d'un câble 3 dont l'extrémité inférieure — non représentée — est mise à la terre comme il est bien connu. La tige 1 est immobilisée par des moyens classiques non représentés, dans un corps électriquement isolant 4 qu'il traverse axialement. Ce corps 4 est solidaire d'un tube 5 servant à fixer de façon connue et non représentée cet ensemble à la partie supérieure d'un bâtiment — terrestre ou maritime — ou d'un ouvrage (tel que tour de radio-communication ou de télévision) que l'on veut protéger de la foudre. Tout ce que l'on vient de décrire est classique. La partie nouvelle et originale réside dans la présence d'une pièce métallique 6, fixée de toute façon connue — non représentée — au corps isolant 4, de façon à être électriquement bien isolée de la tige 1 et du câble 3 de mise à la terre. La pièce 6 comprend un premier bras, 7, formant sonde électrique, s'étendant radialement vers l'extérieur par rapport à la pièce isolante 4, sur une distance qui peut être, par exemple, de 10 à 20 cm ou davantage. A son extrémité libre, le bras 7 se termine, dans cet exemple, par trois pointes métalliques effilées 8, 9, 10. Le rôle de la partie 7 avec ses pointes 8, 9, 10 est de faire prendre à l'organe 6 le potentiel électrique atmosphérique de la région où elle se trouve.

La pièce 6 comprend aussi un second bras, 11, dont l'extrémité libre 12 est pointue et voisine de la région supérieure de la tige de paratonnerre 1, tout près de la pointe 2 de cette tige. Cette extrémité 12 forme électrode comme on le verra plus loin.

Dans une variante, il pourrait y avoir plusieurs pièces telles que 6, disposées en étoile autour du corps isolant 4. Dans une autre variante, la pointe 8 de la partie 7 pourrait seule exister, les pointes 9 et 10 étant alors supprimées.

Le fonctionnement est le suivant.

On sait que le potentiel atmosphérique croît à partir du sol et que par temps d'orage, le gradient de potentiel peut atteindre des milliers, voire des dizaines de milliers, de volts par mètre de hauteur. La partie 7 de la pièce 6 a pour effet que cette pièce prend le potentiel de l'atmosphère de l'endroit où elle se trouve. L'effet électrique bien connu dit « de pointe » des pointes 8, 9, 10 accélère cette mise au potentiel atmosphérique de la pièce 6.

Par temps d'orage, la différence de potentiel entre la pointe 12 (au potentiel atmosphérique existant dans la région de la pointe du paratonnerre) et la tige 1 est si élevée qu'une décharge électrique se produit entre 12 et 1. Cette décharge a pour résultat de mettre momentanément la pièce 7 au potentiel zéro et la décharge s'arrête. La pièce 6 prend à nouveau le potentiel atmosphérique et une nouvelle décharge se produit entre 7 et 1. Les décharges successives se produisent ainsi à une cadence très rapide, si bien qu'en pratique, par temps d'orage tout se passe comme s'il produisait une décharge continue. Cette décharge électrique a pour effet de produire dans la région de l'atmosphère se trouvant au-dessus de la pointe 2, un chemin conducteur que la foudre emprunte de façon privilégiée pour ganger le sol par l'intermédiaire du câble 3 dit de descente de paratonnerre, ainsi qu'il a été constaté expérimentalement.

Ainsi se trouve réalisée une installation de paratonnerre ayant les avantages très supérieurs des installations à sources radio-actives puissantes, mais sans emploi de telles sources. De plus, l'efficacité de l'installation augmente avec l'intensité de la décharge entre 12 et 1, donc avec l'augmentation du gradient du potentiel atmosphérique, c'est-à-dire précisément lorsque c'est le plus utile du point de vue de la protection que doit assurer le paratonnerre.

Il y aura évidemment avantage, du point de vue de la sécurité de l'environnement de la descente de paratonnerre, à utiliser non pas une descente de paratonnerre classique constituée par un conducteur nu tel que 3, mais une descente constituée par un conducteur blindé, dont le blindage métallique est électriquement isolé du conducteur et est mise à la terre, tout comme le conducteur lui-même. Le document CH-A-521 677 et les brevets correspondants d'autres pays (notamment US-A-3 919 956 et 2 212 156) décrivent une telle descente de paratonnerre perfectionné empêchant toute décharge électrique secondaire dont le danger est bien connu.

Une installation telle que décrite peut être utilisée non seulement pour protéger des bâtiments terrestres ou marins et des stations de télécommunications, mais aussi des lignes à haute tension, munies ou non d'un conducteur (fil ou câble) de garde relié électriquement, sur chaque pylone, à la base d'une tige de paratonnerre reliée à la terre, de préférence par un câble blindé.

## Revendications

1. Installation de paratonnerre, caractérisée en ce qu'elle comporte au moins un organe (6) conducteur de l'électricité, disposé au voisinage de la partie supérieure du paratonnerre (1, 2), électriquement isolé de cette pointe (1, 2) et du conducteur (3) reliant celle-ci au sol, cet organe (6) présentant, d'une part, une partie (7) se terminant par au moins une pointe (8, 9, 10), pour faciliter la mise de cet organe (6) au potentiel électrique atmosphérique, et d'autre part, une seconde partie (11) formant une électrode (12) disposée à suffisamment faible distance de la tige (1) du paratonnerre, pour que, par temps d'orage au moins, sous l'effet de la différence de potentiel entre le dit organe conducteur (6) et la tige du paratonnerre (1), une décharge électrique s'établisse entre cette électrode (12) et cette tige (1), suffisante à elle seule pour ioniser par chocs l'air ambiant par temps d'orage et augmenter l'efficacité du paratonnerre.

2. Installation selon la revendication 1, caractérisée en ce que la première partie mentionnée (7) de l'organe conducteur (6), s'étend selon une direction générale radiale par rapport à la tige du paratonnerre (1).

3. Installation selon la revendication 1 ou 2, caractérisée en ce que la partie (11) formant électrode (12) se termine aussi, à son extrémité voisine de la tige du paratonnerre, par une pointe, pour faciliter l'établissement de la décharge électrique entre cette électrode et la tige du paratonnerre.

## Claims

1. A lightning rod assembly characterized in that it comprises at least one element (6) capable of conducting electricity disposed in the vicinity of the upper part (1, 2) of the lightning rod and electrically insulated from the tip (1, 2) and from the conductor (3) connecting the tip to the earth, said element (6) being provided on the one hand with a part (7) terminated by at least one point (8, 9, 10) for facilitating the adjustment of this element (6) to the electric potential of the atmosphere, and on the other hand with a second part (11) functioning as an electrode (12) and disposed at a sufficiently short distance from the rod (1) of the lightning rod assembly for allowing at least in the event of stormy weather an electric discharge to take place between the electrode (12) and the rod (1) of the lightning rod assembly as the result of the potential difference which develops between the conductive element (6) and the rod (1), the discharge being sufficient in itself to ionize by shocks the surrounding air, thereby increasing the efficiency of the lightning rod assembly in stormy weather.

2. An assembly according to Claim 1, characterized in that said first part (7) of the conductive element (6) is oriented in a generally radial direction with respect to the rod (1) of the lightning rod assembly.

3. An assembly according to Claim 1 or 2, characterized in that the part (11) functioning as an electrode (12) is terminated at the end which is close to the rod of the lightning rod assembly with a point for facilitating the occurence of the electric discharge between this electrode and the rod of the lightning rod assembly.

## Patentansprüche

1. Blitzableiteranlage, dadurch gekennzeichnet, dass sie mindestens eine elektrische leitende Vorrichtung aufweist, die in der Nähe des oberen Teils des Blitzableiters (1, 2) angebracht ist und von der Blitzableiterspitze (1, 2) und vom Leiter (3), welcherjene mit der Erde verbindet, elektrisch isoliert ist, wobei diese Vorrichtung (6) einerseits einen Teil (7), der mit mindestens einer Spitze (8, 9, 10) endet, aufweist, damit die Vorrichtung (6) besser das elektrische Potential der Atmosphäre annimmt, und andererseits einen zweiten Teil (11) aufweist, der eine Elektrode (12) bildet und mit genügend kleinem Abstand zur Blitzableiterstange (1) angeordnet ist, um, mindestens bei Gewitterwetter, unter dem Einfluss des Potentialunterschiedes zwischen der besagten leitenden Vorricchtung (6) und der Blitzableiterstange (1) eine elektrische Entladung zwischen dieser Elektrode (12) und dieser Stange (1) zu verursachen, Entladung, welche allein genügt, um die Umgebungsluft bei Gewitterwetter durch Stossionisation zu ionisieren und die Wirksamkeit des Blitzableiters zu erhöhen.

2. Blitzableiteranlage gemäss Anspruch 1, dadurch gekennzeichnet, dass der zuerst erwähnte Teil (7) der leitenden Vorrichtung (6) sich in radialer Richtung in bezug auf die Blitzableiterstange (1) ausdehnt.

3. Blitzableiteranlage gemäss Anspruch 1 oder 2, dadurch gekennzeichnet, dass der Teil (11), der eine Elektrode (12) bildet, einen spitzen Endteil in der Nähe der Blitzableiterstange (1) aufweist, um die Bildung einer elektrischen Entladung zwischen dieser Elektrode und der Blitzableiterstange zu erleichtern.